(19) Europäisches Patentamt / European Patent Office / Office européen des brevets

(11) **EP 2 344 905 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **09752731.1**

(22) Anmeldetag: **14.10.2009**

(51) Int Cl.:
**G01S 5/14** *(2006.01)*

(86) Internationale Anmeldenummer:
**PCT/EP2009/007577**

(87) Internationale Veröffentlichungsnummer:
**WO 2010/043421 (22.04.2010 Gazette 2010/16)**

(54) **SYSTEM ZUM BESTIMMEN DER BEWEGUNG EINER SCHWANKENDEN KONSTRUKTION**

SYSTEM FOR DETERMINING THE MOVEMENT OF A SWAYING STRUCTURE

SYSTÈME POUR DÉTERMINER LE MOUVEMENT D'UNE CONSTRUCTION OSCILLANTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.10.2008 DE 102008052799**

(43) Veröffentlichungstag der Anmeldung:
**20.07.2011 Patentblatt 2011/29**

(73) Patentinhaber: **Fraunhofer-Gesellschaft zur Förderung der angewandten Forschung e.V. 80686 München (DE)**

(72) Erfinder:
• **EIDLOTH, Andreas 91052 Erlangen (DE)**
• **FRANKE, Norbert 91058 Erlangen (DE)**

(74) Vertreter: **Pfenning, Meinig & Partner GbR Patent- und Rechtsanwälte Joachimstaler Strasse 12 10719 Berlin (DE)**

(56) Entgegenhaltungen:
**DE-A1- 10 055 289   US-B1- 6 366 854**

**Beschreibung**

Die Erfindung betrifft ein System zum Bestimmen der Bewegung einer schwankenden Konstruktion.

Aus der EP 1 556 713 B1 ist ein Lokalisierungssystem bekannt, mit dem es möglich ist, die Position von wenigstens einem mobilen Objekt kontinuierlich in Echtzeit zu verfolgen. Dabei handelt es sich beispielsweise um Objekte, wie Bälle oder Spieler, die sich auf einem Spielfeld bewegen. Bei diesem Lokalisierungssystem sind mehrere Empfänger fest installiert und an den Objekten sind Sender angebracht, deren Signale von den Empfängern empfangen und ausgewertet werden. Um eine hochgenaue dreidimensionale Lokalisierung zu ermöglichen, müssen Empfänger auch in größeren Höhen, bestenfalls sogar direkt über dem Spielfeld, angebracht werden. Daher ist es unumgänglich, die Empfänger an hohen Masten anzubringen, wobei sich beispielsweise bei Fußballfeldern Flutlichtmasten anbieten.

Es hat sich aber gezeigt, dass solche Masten unter Windeinfluss zu schwanken beginnen. Diese Bewegungen beeinflussen die reale und gemessene Distanz zwischen Sender, d.h. zwischen zu lokalisierendem Objekt, und Empfänger. Wird die Bewegung der Masten nicht berücksichtigt, so übertragen sich deren Schwankungen auf das zu lokalisierende Objekt. Dabei können bei einem ruhenden Objekt, beispielsweise einem ruhenden Ball, im ungünstigsten Fall Positionsschwankungen von mehreren Zentimetern entstehen.

Es ist auch bekannt, dass die Bewegungen hoher Turmkonstruktionen oder von Hochhäusern aufgrund von Stürmen oder Taifunen über eine GPS Erfassung und Auswertung bestimmt werden.

DE 10 055 289 A1 beschreibt ein System zur Bestimmung der Position eines Objekts mit einer Referenz-Sende-Vorrichtung und mindestens zwei Sende-Empfangs-Vorrichtungen, die in fester Position zueinander und zu der Referenz-Sende-Vorrichtung angeordnet sind. Die Entfernungsbestimmung beruht auf einer Laufzeitmessung, wobei eine Phasenmessung erwähnt ist, die zusätzlich herangezogen werden kann.

In US 6 366 854 1 ist ein GPS-System offenbart, mit dem anhand von Trägerphasenmessungen Distanz- bzw. Positionsänderungen vorgenommen werden. Bei dem GPS System wird ein kontinuierliches Signal von jedem der drei Satelliten ein kontinuierliches Signal empfangen, so dass eine einfache Phase-Lock-Loop-Schaltung verwendet werden kann, um die distanzbedingten Änderungen zu verfolgen bzw. die Phasenmesswerte zu erzeugen.

Der Erfindung liegt somit die Aufgabe zugrunde, ein System zum Bestimmen der Bewegung einer schwankenden Konstruktion, an der ein Empfänger angebracht ist, zu schaffen, mit dem es möglich ist, eine genaue Änderung der Position der Konstruktion und damit des Empfängers zu bestimmten.

Diese Aufgabe wird erfindungsgemäß durch ein System zum Bestimmen der Bewegung einer schwankenden Konstruktion nach den Merkmalen des Hauptanspruchs gelöst.

Durch die in den Unteransprüchen angegebenen Maßnahmen sind vorteilhafte Weiterbildungen und Verbesserungen möglich.

Dadurch, dass mindestens drei Referenzsender mit jeweils bekannter und feststehender Position vorgesehen sind, deren Sendesignale als auf einen Träger mit definierter Trägerfrequenz aufmodulierte Signale ausgebildet sind, wobei eine Auswerteeinrichtung aus den Empfangssignalen unter Berücksichtigung der definierten Trägerfrequenz Phasenmesswerte bestimmt, aus denen die Entfernung jeweils zu den Sendern und die Positionsänderung des Empfängers und damit der schwankenden Konstruktion berechenbar sind, wird eine hochgenaue Erfassung der Schwankungen der Konstruktion erreicht. Bei der Verwendung von nur drei solcher Referenzsender, ist es notwendig, dass alle Sender untereinander und zusätzlich mit dem Empfänger synchronisiert bzw. phasenstarr gekoppelt sind. Werden vier solcher Sender installiert, die untereinander synchronisiert bzw. phasenstarr gekoppelt sind, ist eine Synchronisation mit dem Empfänger an der bewegten Konstruktion nicht nötig, da die mit dem vierten Referenzsender gewonnenen Informationen die unbekannte Empfangszeit eliminiert werden kann. Ein anderer Aufbau des Systems, mit dem alle dreidimensionalen Informationen bestimmt werden können, besteht darin, dass drei nicht synchronisierte bzw. phasenstarr gekoppelte Referenzsender und mindestens ein zusätzlicher feststehender Empfänger bekannter Position vorgesehen wird, wobei letzterer mit dem bewegten Empfänger synchronisiert bzw. phasenstarr gekoppelt ist. Die Referenzsender können nen jeweils unterschiedliche Trägerfrequenzen aufweisen, vorteilhaft ist jedoch, dass die Sendesignale auf eine für alle Referenzsender gemeinsame Trägerfrequenz aufmoduliert sind, da dann der Auswertungsaufwand merkbar reduziert werden kann. Beispielsweise können das 2,4 GHz-ISM-Band oder das 5 GHz-Band oder andere laut Frequenzregularien oder Frequenzzuteilung zur Verfügung stehende Bänder eingesetzt werden. Die Information zur Unterscheidung der einzelnen Referenzsender kann dann als Identifikationscode in einer Bitsequenz auf den Träger moduliert werden.

Besonders vorteilhaft ist, das erfindungsgemäße System bei einer Anordnung zum Kalibrieren eines Funksystems zum Bestimmen der Position mindestens eines mobilen Objektes in einem dreidimensionalen Raum mit mehreren Empfängern vorzusehen bzw. als Infrastruktur zu integrieren, wobei zumindest ein Empfänger an einer schwankenden Konstruktion befestigt ist und wobei eine Auswertevorrichtung vorgesehen ist, die die Positionsänderung des an der Konstruktion befestigten Empfängers bei der Bestimmung der Position des mobilen Objektes berücksichtigt. Auf diese Weise kann das Funksystem kalibriert werden und eine hochgenaue dreidimensionale Lokalisierung zur Verfügung gestellt werden, bereinigt von Einflüssen der schwankenden Konstruktion. Die Empfänger sind vorzugsweise untereinander synchronisiert oder phasenstarr gekoppelt, die verwendeten Referenzsender können dann untereinander nicht synchronisiert sein, wodurch preiswerte kleine Referenzsender verwendet werden können.

Ein Ausführungsbeispiel der Erfindung ist in der Zeichnung dargestellt und wird in der nachfolgenden Beschreibung näher erläutert. Es zeigen:

Fig. 1 eine schematische Darstellung eines ersten Ausführungsbeispiels des erfindungsgemäßen Systems,

Fig. 2 eine schematische Darstellung eines zweiten Ausführungsbeispiels des erfindungsgemäßen Systems

Fig. 3 eine schematische Darstellung eines dritten Ausführungsbeispiels des erfindungsgemäßen Systems,

Fig. 4 eine schematische Darstellung des dritten Ausführungsbeispiels des erfindungsgemäßen Systems, das in ein Lokalisierungssystem integriert ist,

Fig. 5 eine Sicht von oben im X-Y-Koordinatensystem auf die ermittelte Position eines Flutlichtmasts, und

Fig. 6 eine Darstellung der X-Position, der Y-Position und der Z-Position des Flutlichtmasts über die Zeit.

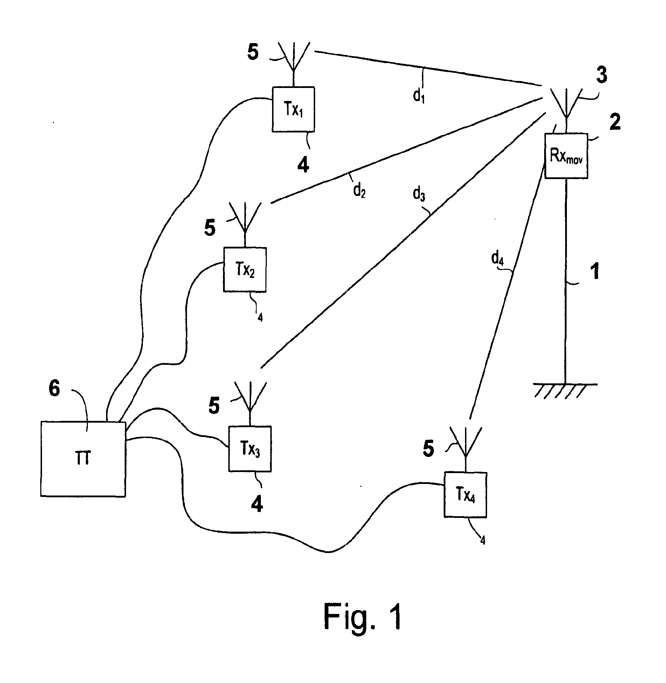

In Fig. 1 ist ein System zum Bestimmen der Bewegung einer schwankenden Konstruktion beispielsweise eines Mastes dargestellt, wobei das Schwanken durch Umwelteinflüsse, nämlich durch Wind oder Sturm hervorgerufen wird. In der Fig. 1 ist mit 1 ein Mast bezeichnet, an dem ein Empfänger 2 mit Antenne 3 fest angeordnet ist. In der Umgebung des Mastes 1 sind mehrere Referenzsender 4 mit Antennen 5 angeordnet, im Ausführungsbeispiel vier Sender, die feststehend sind und deren Position bekannt ist. Die Referenzsender 4 senden beispielsweise im Zeit- und/oder Codemultiplexverfahren Sendesignale aus, die als auf eine Trägerfrequenz aufmodulierte Signale ausgebildet sind, wobei als Übertragungsbereich vorzugsweise das 2,4 GHz-ISM-Band verwendet wird, aber auch andere Bänder, wie das 5 GHz-ISM-Band oder andere laut Frequenzregularien oder Frequenzzuteilung zur Verfügung stehende Bänder eingesetzt werden können. Die Sendesignale werden vorzugsweise als Sendebursts ausgesandt, wobei alle Referenzsender 4 im Ausführungsbeispiel eine Trägerfrequenz nutzen. In den Sendesignalen, d.h. in den Sendebursts sind Informationen über den zugehörigen Referenzsender 4 z.B. Identifikationscodes enthalten, Die als Bitsequenz auf den Träger moduliert sind. Die Referenzsender 4 sind untereinander synchronisiert, d.h. sie haben alle den gleichen Referenztakt, z.B. sind sie über ein Glasfaser-Netzwerk mit einer Taktquelle 6 verbunden oder über Funk und freilaufende Atomuhren oder dergleichen. Gemäß obiger Beschreibung zeigt Fig. 1 genau eine Variante von mehreren Lösungsmöglichkeiten.

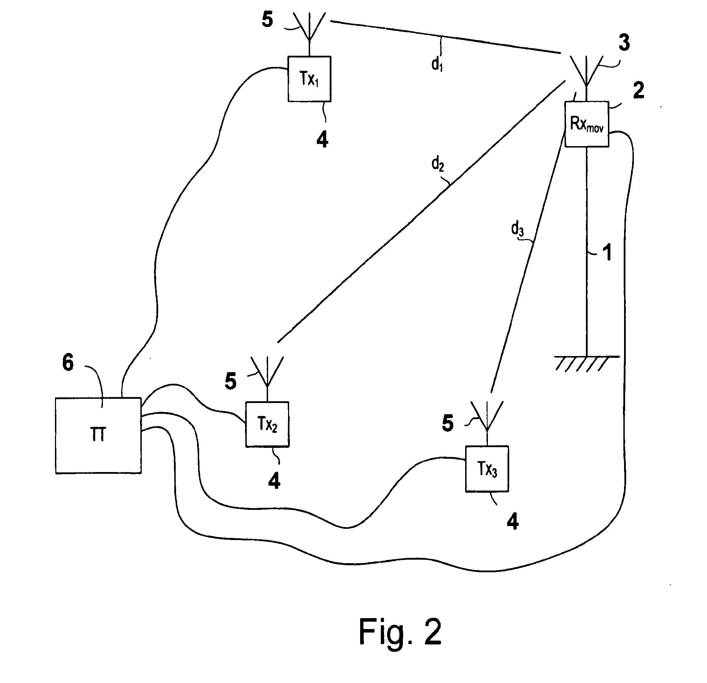

Wird beispielsweise auch die Empfängerzeit des Empfängers 3 mit den Senderzeiten der Referenzsender 4 synchronisiert, kann einer der Referenzsender 4 weggelassen werden. Dies ist in Fig. 2 dargestellt und für die Auswertung der einfachste Fall, da alle Sender 4 und der Empfänger 3 denselben Takt haben.

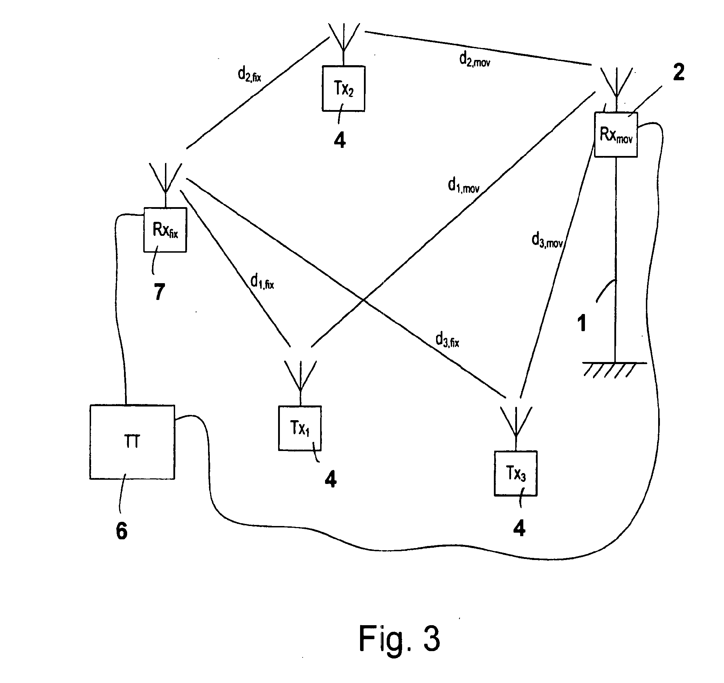

Genauso könnten Fig. 1 und 2 auch entsprechend Fig.3 in der Hinsicht abgeändert werden, dass drei unsynchronisierte Referenzsender 4 und zwei Empfänger 2, 7 verwendet werden, die untereinander synchronisiert sind, dies ist durch die Verbindungen mit der Taktquelle 6 dargestellt. Dabei befindet sich einer 7 dieser Empfänger auf einer ortsfesten Referenzposition und der andere 2 auf der schwankenden Konstruktion.

Bei den Ausführungen entsprechend Fig. 1 bis 3 werden in der Antenneneinheit des Empfängers 2 die empfangenen und von den Referenzsendern 4 gesendeten Sendebursts ins Basisband heruntergemischt, d.h. der Träger von beispielsweise 2,4 GHz wird entfernt und die Identitätsinformation über die Referenzsender 4 bei der weiteren Verarbeitung berücksichtigt. Dann wird die jeweilige empfangene Phasenlage des Trägers am Empfänger 2 mit der des jeweiligen Referenzsenders 4 verglichen, d.h. es wird die Phasendifferenz gebildet. Diese Phasendifferenz bzw. der gemessene Phasenwinkel nimmt mit der jeweiligen Entfernung $d_i$ zwischen Referenzsender 4 und Empfänger 2 ab und entspricht grundsätzlich $2\pi d_i/\lambda$. Die Entfernung $d_i$ wird im einfachsten Fall (Fig. 2) somit bestimmt durch

$$d_i = -\varphi_{ei} * \lambda / 2\pi + o_i$$

wobei i der Index über die Referenzsender 4 ist und $\varphi_{ei}$ Phasenmesswert in Radiant, der mittels der im Empfänger 2 gemessenen Phasenlage und der Bildung der genannten Phasendifferenz bestimmt wird, und $\lambda$ die Wellenlänge des Trägers in Metern bezeichnet. Bei einer Trägerfrequenz von 2,4 GHz beträgt die Wellenlänge 12,27 cm. $o_i$ ist ein Distanzoffset, ebenfalls in Metern.

Bei der Ausführungsform nach Fig. 1, in der der Empfänger 2 eine eigene Taktquelle hat, würde aufgrund eines Frequenzversatzes zwischen der Taktquelle 6 und der des Empfängers 2 eine nicht gegebene Distanzänderung auftreten. Da die berechneten Distanzen für alle Referenzsender 4 in derselben Weise verfälscht wären, kann mit der Information des vierten Referenzsenders 4 durch Bildung von Distanzdifferenzen ein Fehler eliminiert werden.

Entsprechend kann bei der Ausführungsform nach Fig. 3 mit den am feststehenden Empfänger 7 bestimmten Phasenmesswerten und den bekannten Distanzen zwischen Referenzsendern 4 und Empfänger 7 auf den Phasenwinkel am Referenzsender 4 zum Sendezeitpunkt zurückgerechnet werden. Damit sind die Referenzsender 4 mit dem bewegten Empfänger 2 auf mathematischem Wege synchronisiert. Anschließend können Distanzen zwischen dem bewegten Empfänger 2 und den Referenzsendern 4 berechnet werden. Dies geschieht unter Einbeziehung der berechneten Phasenwinkel am Sender 4, der Phasenmesswerte am bewegten Empfänger 2 und dem Distanzoffset aus oben stehender Gleichung.

Der Offset wird initial durch eine von einem Vermesser, z.B. einem Laservermesser ermittelte Position des Mastes 1, durch die Position der Referenzsender 4 sowie durch die erste Phasenmessung der jeweiligen Sender-Empfänger-Strecke mit der oben genannten Gleichung bestimmt.

Dieser anfängliche Offset wird im weiteren Messverlauf zur Berücksichtigung unterschiedlicher Einflüsse korrigiert und dem jeweilig aktuellen Offset angepasst. Bei den Korrekturen handelt es sich um die Kompensation der Temperaturdrift im System, um eine Anpassung der Absolutposition sowie um eine Korrektur der sogenannten "cycle slips" (2π-Phasensprünge).

Da bei einer Änderung der Temperatur in System sich die gemessenen Längen verändern können, muss eine solche Drift kompensiert werden und zwar durch Anpassen des Offsets. Da die Drift, d.h. das Wegwandern des Messwertes langsam geschieht, ist sie der Änderung des Messwertes durch tatsächliche Bewegung überlagert und kann beispielsweise durch Filterverfahren erfasst werden. Dadurch ist gewährleistet, dass bei Längenänderungen, die eine halbe Wellenlänge übersteigen, keine Positionssprünge als Folge der Mehrdeutigkeit der Wellenlänge im System auftreten.

Eine weitere langsame Korrektur des jeweiligen Offsets $o_i$ stellt sicher, dass die mittlere Position des Empfängers 2 mit der Position, die durch den Laservermesser ermittelt wurde, übereinstimmt. Da erfindungsgemäß nur mit Phasenmesswerten gearbeitet wird, kann keine absolute Position bestimmt werden. Bei Systemstart wird daher, wie schon oben erwähnt, mit einer Position begonnen, welche ohne Windeinfluss bestimmt wurde und dem System bereits bekannt ist. Dies kann allerdings zu größeren Fehlern führen, wenn bei Systemstart die tatsächliche Position des Empfängers 2 stark von dieser bekannten Position abweicht. Die Korrektur wird dadurch erreicht, dass aufgrund von Mittelwerten der Messungen die gemessene Position in Richtung dieser bekannten Position nachgeführt wird. Diese Korrektur nutzt die Tatsache aus, dass der Mast um seine "Ruheposition" herum oszilliert. Durch diese Vorgehensweise kann auf eine aufwendige Bestimmung der Absolutposition verzichtet werden.

Bei der Messung der Phasenwerte ist zu beachten, dass die Lösung der obigen Gleichung aufgrund der 2π-Mehrdeutigkeit der Phasenmesswerte ebenfalls mehrdeutig ist, d.h. durch Änderung der Messdistanz kann es vorkommen, dass Sprünge von einer zur nächsten Phasenmessung auftreten, die, wie schon ausgeführt, einen Wert von 2π aufweisen. Würden diese nicht kompensiert, so würde die gemessene Distanz um eine Wellenlänge springen und somit das Positionsergebnis erheblich verändern. Somit wird eine weitere Korrektur des Offsets vorgenommen, um Distanzsprünge zu verhindern, da die Distanz der Summe aus Phasenmesswert (in Metern) und dem Offset entspricht. Es handelt sich hier nicht mehr um langsame Korrekturen, denn der Offset kann von Burst zu Burst um eine Wellenlänge springen, um einen auftretenden Phasensprung bei der Messung zu kompensieren. Diese Kompensation geschieht durch das so genannte "phase-unwrapping" der relativen Phasenmesswerte, das an den Offsets vorgenommen wird.

In einer Auswertevorrichtung, die beispielsweise ein entfernt zum Empfänger 2 angeordneter Computer ist und an den die Ergebnisse der Messung der Distanz $d_i$ übertragen wird, werden diese verwendet, um die Position des Mastes 1 bzw. des Empfängers 2 in Abständen oder kontinuierlich zu bestimmen. Selbstverständlich können auch die Phasenmesswerte an die Auswertevorrichtung übertragen werden, wobei dann unter Verwendung der obigen Gleichung die entsprechende Position bestimmt wird. Üblicherweise wird zur Auswertung ein Kalman-Filter verwendet, wobei auch noch andere Verfahren und Verarbeitungseinrichtungen verwendet werden können, wie algebraische Algorithmen, z.B. der Bancroft-Algorithmus oder wie neuronale Netze oder Partikelfilter. Es werden dann von der Auswertevorrichtung drei Koordinaten für die Position des Empfängers 2 geliefert.

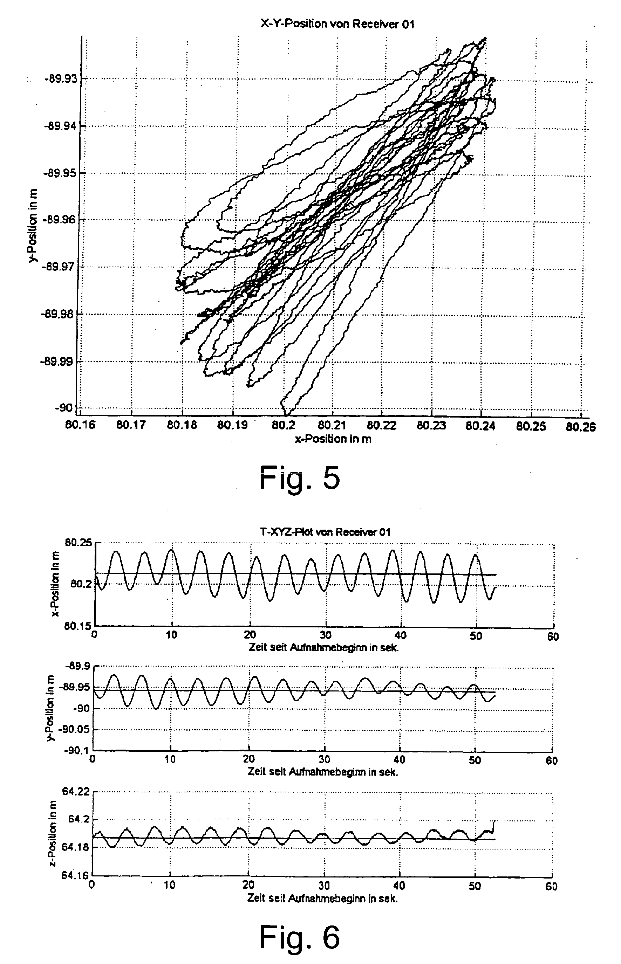

Fig. 5 zeigt die Sicht von oben, d.h. die X- und Y-Position in einem gewählten Koordinatensystem, auf die mittels der Phasenmessung ermittelten Position des Mastes 1. Deutlich ist die Oszillation der Bewegung des Mastes zu erkennen.

In Fig. 6 sind die Positionsverläufe der einzelnen Koordinatenachsen über die Zeit dargestellt, wobei die mittlere Linie jeweils die Position des Mastes, die anfänglich durch die Laservermessung festgestellt wurde, angibt. Die auf der Z-Koordinate zu erkennende Restschwingung existiert jedoch physikalisch nicht, dieser Fehler entsteht aufgrund der Anordnung der Referenzsender 4 bezüglich des bewegten Empfängers 2. Der Empfänger 2 sieht alle Referenzsender 4 in einem relativ kleinen Raumwinkel, was dazu führt, dass ein Übersprechen zwischen den einzelnen Koordinatenachsen entsteht.

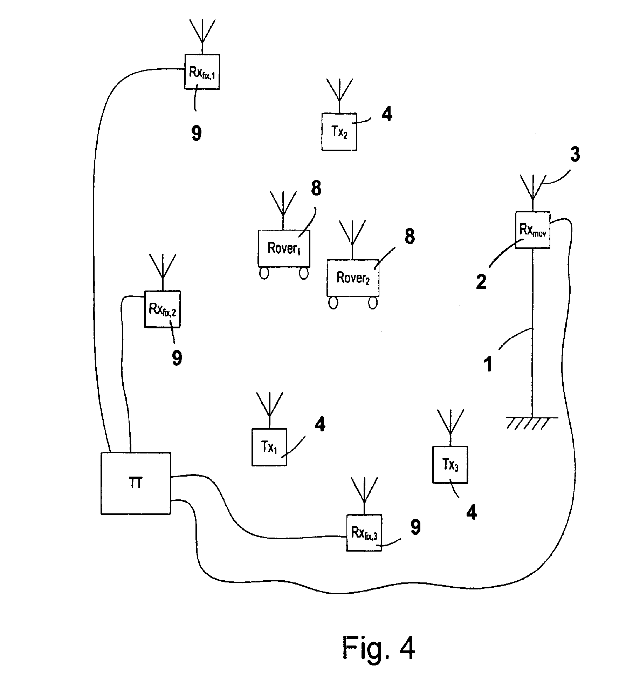

Ein solches System, wie oben beschrieben bzw. ein solches Verfahren kann bei einer Anordnung zur hochgenauen dreidimensionalen Lokalisierung eines oder mehrerer beweglicher Objekte, insbesondere eines oder mehrerer sich auf einem Spielfeld bewegenden Objekte, wie eines Balls und/oder eines Spielers, verwendet werden. Dieses System ist in Fig. 4 dargestellt. Beispielhaft sind zwei bewegliche Objekte vorgesehen, die mit einem Sender 8 versehen sind, und eine Mehrzahl von Empfängern 9, 2 ist um das Spielfeld herum oder sogar über dem Spielfeld angeordnet, wobei zumindest einige der Empfänger, im Ausführungsbeispiel ein Empfänger 2, beispielsweise an Flutlichtmasten angebracht sind. Bei einem solchen System werden dann die feststehenden Referenzsender 4 in der Nähe des Spielfeldes positioniert und die an den Flutlichtmasten befestigten Empfänger entsprechen dem Empfänger 2 und die Empfänger 9 dem Empfänger 7 der Fig. 3. Der jeweilige Objektsender 8 sendet an die Empfänger 2, 9 Funksignale und die empfangenen Signale werden zur Bestimmung der Position des beweglichen Objekts in einer Auswerteeinrichtung ausgewertet, die mit der oben erwähnten Auswertevorrichtung zur Bestimmung der Position des beweglichen Mastes 1 übereinstimmen kann. Bei der Auswertung zur Bestimmung der Objektposition werden die Schwankungen entsprechend Fig. 5 und Fig. 6 des Empfängers 2 mit berücksichtigt, und die Position des beweglichen Objekts wird entsprechend korrigiert. Bei dem dargestellten Lokalisierungssystem sind die Empfänger untereinander synchronisiert, was durch die Verbindungsleitungen mit der Taktquelle 6 angedeutet ist. Das in dieses Lokalisierungssystem integrierte System zur Feststellung der Schwankungen des Mastes 1 dient hier als Infrastruktur zur Kalibrierung des Lokalisierungssystems mit einer entsprechenden Erhöhung der Genauigkeit. Als Referenzsender 4 können dann kleine, günstige und nicht miteinander verbundene Miniatursender verwendet werden.

In einem anderen Ausführungsbeispiel, bei dem die Schwankung eines Mastes oder eines Gebäudes bestimmt wird, werden, wie schon oben beschrieben, aus den Positionsverläufen der einzelnen Koordinatenachsen die Schwankung ggf. bei unterschiedlichen Wetterbedingungen berechnet.

**Patentansprüche**

1. System zum Bestimmen der Bewegung einer schwankenden Konstruktion, an der fest ein Empfänger (2) angebracht ist, ausgestallet **durch** mindestens drei Referenzsender (4) mit jeweils bekannter und fester Position deren Sendesignale als auf einen Träger mit definierter Trägerfrequenz aufmodulierte Signale ausgebildet sind, eine Auswerteinrichtung, die ausgebildet ist, aus den vom Empfänger (2) empfangenen Sendesignalen der einzelnen Referenzsender (4) unter Berücksichtigung der definierten Trägerfrequenz Phasenmesswerte zu bestimmen, aus denen die Entfernung jeweils zu den Referenzsendern (4) und die Positionsänderung des Empfängers (2) und damit der schwankenden Konstruktion berechenbar sind, wobei die Entfernung zwischen Empfänger (2) und dem jeweiligen Referenzsender (4) berechnet wird aus

$$d_i = \varphi_{ei} * \lambda / 2\pi + o_i$$

wobei d die Distanz zwischen dem jeweiligen Referenzsender (4) und Empfänger (2), i der Index über die Referenzsender, $\varphi_{ei}$ der Phasenmesswert am Empfänger für den jeweiligen Referenzsender in rad, $\lambda$ die Wellenlänge des Trägers in m und $o_i$ der jeweilige Offset in m ist und der jeweilige Offset anfänglich durch eine von einem Vermessungsgerät gemessene Position der Konstruktion, die Position der festen Referenzsender (4) und durch eine erste Phasenmessung bestimmbar ist und dass die Auswerteeinrichtung ausgebildet ist, die jeweiligen Offsetwerte zur Kompensation von $2\pi$-Phasensprünge der Phasenmesswerte anzupassen, wobei eine plötzliche Distanzänderung auswertbar ist.

2. System nach Anspruch 1, **dadurch gekennzeichnet, dass** allen Referenzsendern (4) eine gemeinsame definierte Trägerfrequenz zugeordnet ist.

3. System nach einem der Ansprüche 1 bis 2, **dadurch gekennzeichnet, dass** die Anordnung aus mindestens drei feststehenden Referenzsendern (4) mit bekannter Position und dem einen Empfänger (2) untereinander zeitlich synchronisiert oder über eine gemeinsame Taktquelle (6) phasenstarr verbunden sind.

4. System nach einem der Ansprüche 1 bis 2, **dadurch gekennzeichnet, dass** ein vierter feststehender Referenzsender (4) vorgesehen ist, wobei die vier Referenzsender (4) untereinander zeitlich synchronisiert oder über eine gemeinsame Taktquelle (6) phasenstarr verbunden sind.

5. System nach einem der Ansprüche 1 bis 2, **dadurch gekennzeichnet, dass** zusätzlich zu dem Empfänger (2) an der schwankenden Konstruktion mindestens ein feststehender Empfänger (7) bekannter Position vorgesehen ist, wobei die Referenzsender (2) nicht miteinander synchronisiert oder phasenstarr gekoppelt sind und der schwankende Empfänger (2) und der feststehende Empfänger (7) untereinander synchronisiert oder phasenstarr gekoppelt sind und die Sendezeitpunkte der jeweiligen Referenzsender (2) bekannter Position über die jeweiligen Empfangssignale des feststehenden Senders berechenbar sind.

6. System nach einem der Ansprüche 1 bis 5, **dadurch gekennzeichnet, dass** die Auswerteeinrichtung ausgebildet ist, bei einer Änderung der Temperatur im System den jeweiligen Wert des Offsets anzupassen, wobei die Messwertänderung aufgrund der Temperaturänderung über Filterverfahren erfassbar ist.

7. System nach einem der Ansprüche 1 bis 6, **dadurch gekennzeichnet, dass** die Auswerteeinrichtung ausgebildet ist, eine mögliche Abweichung der Position der schwankenden Konstruktion zu der gemessenen Position bei Beginn der Bestimmung durch Änderung der Werte der jeweiligen Offsets über Mittelwertauswertung der Positionsmesswerte zu kompensieren

8. Anordnung zum Kalibrieren eines Funksystems zum Bestimmen der Position mindestens eines mobilen Senders (8) in einem dreidimensionalen Raum mit mehreren Empfängern (2, 9), von denen mindestens einer (2) an einer durch Umwelteinflüsse schwankenden Konstruktion befestigt ist, und mit einem System nach einem der Ansprüche 1 bis 7, wobei eine Auswertevorrichtung vorgesehen ist, die die Positionsänderung des an der Konstruktion befestigten Empfängers (2) bei der Bestimmung der Position des mobilen Senders (8) berücksichtigt.

## Claims

1. A system for determining the movement of a swaying structure to which a receiver (2) is attached, formed by

   at least three reference transmitters (4) having a respective known and fixed position whose transmitted signals are formed as signals modulated onto a carrier with a defined frequency, by an evaluation device which is configured to determine measured phase values from the transmitted signals of the individual reference transmitters (4) received by the receiver (2) while taking account of the defined carrier frequency, from which measured phase values the distance respectively from the reference transmitters (4) and the position change of the receiver (2), and thus of the swaying structure, can be calculated, wherein the distance between the receiver (2) and the respective transmitter (4) is calculated from

$$d_i = -\varphi_{ei} * \frac{\lambda}{2\pi} + o_i$$

   where d is the distance between the respective reference transmitter (4) and the receiver (2), i is the index over the reference transmitters, $\varphi_{ei}$ is the measured phase value at the receiver for the respective reference transmitter in rad, $\lambda$ is the wavelength of the carrier in m, and $o_i$ is the respective offset in m and the respective offset can initially be determined by a position of the structure measured by a measuring unit, by the position of the fixed reference transmitters (4) and by a first phase measurement and wherein the evaluation device is configured to adapt the respective offset values for the compensation of $2\pi$ phase jumps of the measured phase values, wherein an abrupt distance change can be evaluated.

2. A system in accordance with claim 1, **characterized in that** a common defined carrier frequency is associated with all reference transmitters (4).

3. A system in accordance with one of the claims 1 to 2, **characterized in that** the arrangement of at least three fixed reference transmitters (4) having a known position and the one receiver (2) are synchronized in time or are connected in a phase-locked manner to one another via a common clock source (6).

4. A system in accordance with one of the claims 1 to 2, **characterized in that** a fourth fixed reference transmitter (4) is provided, wherein the four reference transmitters (4) are synchronized in time or are connected to one another in a phase-locked manner via a common clock source (6).

5. A system in accordance with one of the claims 1 to 2, **characterized in that**, in addition to the receiver (2), at least one fixed receiver (7) of a known position is provided at the swaying structure, wherein the reference transmitters (2) are not synchronized or connected in a phase-locked manner to one another and the swaying receiver (2) and the fixed receiver (7) are synchronized or coupled in a phase-locked manner to one another and the transmission times of the respective reference transmitters (2) of a known position can be calculated via the respective received signals of the fixed transmitter.

6. A system in accordance with one of the claims 1 to 5, **characterized in that** the evaluation device is configured to adapt the respective value of the offset on a change of the temperature in the system, wherein the measured value change due to the temperature change can be measured via filtering processes.

7. A system in accordance with one of the claims 1 to 6, **characterized in that** the evaluation device is configured to compensate a possible deviation of the position of the swaying structure from the measured position at the start of the determination by changing the values of the respective offset via mean value evaluation of the measured position values.

8. An arrangement for calibrating a radio system for determining the position of at least one mobile transmitter (8) in a three-dimensional space using a plurality of receivers (2, 9) of which at least one (2) is fastened to a structure swaying due to environmental influences and comprising a system in accordance with one of the claims 1 to 7, wherein an evaluation apparatus is provided which takes account of the position change of the receiver (2) fastened to the structure in the determination of the position of the mobile transmitter (8).

## Revendications

1. Système pour déterminer le mouvement d'une construction oscillante, sur laquelle est apposé de manière fixe un récepteur (2), qui se présente sous la forme d'au moins trois émetteurs de référence (4) ayant respectivement une position connue et fixe, et dont les signaux d'émission se présentent sous la forme de signaux modulés sur une porteuse avec une fréquence de porteuse définie, un dispositif d'exploitation qui est conçu pour déterminer, en tenant compte de la fréquence de porteuse définie, des valeurs de mesure de phase à partir des signaux d'émission, reçus par le récepteur (2), des émetteurs de référence (4) individuels, valeurs à partir desquelles la distance respectivement par rapport aux émetteurs de référence (4) et le changement de position du récepteur (2) et donc de la construction oscillante peuvent être calculés, dans lequel la distance entre le récepteur (2) et l'émetteur de référence (4) respectif est calculée à partir de la relation suivante :

$$d_i = \varphi_{ei} * \lambda / 2\pi + o_i$$

où d est la distance entre l'émetteur de référence (4) respectif et le récepteur (2), i est l'indice des émetteurs de référence, $\varphi_{ei}$ est la valeur de mesure de phase sur le récepteur pour l'émetteur de référence respectif en rad, $\lambda$ est la longueur d'onde de la porteuse en m et $o_i$ est le décalage respectif en m, et le décalage respectif peut être déterminé au départ par une position de la construction mesurée par un appareil de mesure, par la position des émetteurs de référence (4) fixes et par une première mesure de phase, et dans lequel le dispositif d'exploitation est conçu pour ajuster les valeurs de décalage respectives pour la compensation de sauts de phase de $2\pi$ des valeurs de mesure de phase, une variation de distance soudaine pouvant être exploitée.

2. Système selon la revendication 1, **caractérisé en ce qu'**une fréquence de porteuse définie commune est affectée à tous les émetteurs de référence (4).

3. Système selon l'une quelconque des revendications 1 à 2, **caractérisé en ce que** l'agencement constitué d'au moins trois émetteurs de référence (4) fixes de position connue et du récepteur (2) sont mutuellement synchronisés dans le temps ou sont reliés en verrouillage de phase via une source d'horloge (6) commune.

4. Système selon l'une quelconque des revendications 1 à 2, **caractérisé en ce qu'**il est prévu un quatrième émetteur de référence (4) fixe, dans lequel les quatre émetteurs de référence (4) sont mutuellement synchronisés dans le temps ou reliés en verrouillage de phase via une source d'horloge (6) commune.

5. Système selon l'une quelconque des revendications 1 à 2, **caractérisé en ce qu'**en complément du récepteur (2) sur la construction oscillante, il est prévu au moins un récepteur (7) fixe de position connue, dans lequel les émetteurs de position (2) ne sont pas mutuellement synchronisés ou couplés en verrouillage de phase, et le récepteur (2) oscillant et le récepteur (7) fixe sont mutuellement synchronisés ou couplés en verrouillage de phase, et les moments d'émission des émetteurs de référence (2) respectifs de position connue peuvent être calculés par les signaux de réception respectifs de l'émetteur fixe.

6. Système selon l'une quelconque des revendications 1 à 5, **caractérisé en ce que** le dispositif d'exploitation est conçu pour ajuster la valeur respective du décalage en cas de variation de la température dans le système, dans lequel, du fait de la variation de température, la modification de la valeur de mesure est détectable par un procédé de filtrage.

7. Système selon l'une quelconque des revendications 1 à 6, **caractérisé en ce que** le dispositif d'exploitation est conçu pour compenser un écart éventuel de la position de la construction oscillante par rapport à la position mesurée au départ de la détermination, par modification des valeurs des décalages respectifs via une exploitation de la valeur moyenne des valeurs de mesure de position.

8. Agencement pour l'étalonnage d'un système radio pour déterminer la position d'au moins un émetteur mobile (8) dans un espace tridimensionnel avec plusieurs récepteurs (2, 9), parmi lesquels au moins un (2) est fixé sur une construction oscillant en raison d'influences environnementales, et avec un système selon l'une quelconque des revendications 1 à 7, dans lequel il est prévu un dispositif d'exploitation qui prend en considération le changement de position du récepteur (2) fixé sur la construction lors de la détermination de la position de l'émetteur mobile (8).

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1556713 B1
- DE 10055289 A1

- US 63668541 B